# EUROPÄISCHE PATENTANMELDUNG

(11) **EP 1 439 726 A1**
(43) Veröffentlichungstag der Anmeldung: **21.07.2004**
(21) Anmeldenummer: 03001025.0
(22) Anmeldetag: 17.01.2003
(51) Int. Cl.: H04Q 7/38

(54) **Verfahren zur Durchführung einer Datenübertragung mit mindestens zwei Übertragungsstandards**

(71) Anmelder: SIEMENS AKTIENGESELLSCHAFT, 80333 München (DE)
(72) Erfinder: Ball, Carsten, Dr., 81373 München (DE); Heinz, Helmut, 86949 Windach (DE); Ivanov, Kolio, Dr., 81369 München (DE); Müllner, Robert, 81379 München (DE); Treml, Franz, 85221 Dachau (DE)

(57) **Zusammenfassung**

Die Erfindung betrifft ein Verfahren zur Durchführung einer Datenübertragung mit Hilfe eines Funkkommunikationsendgeräts, das zur Verarbeitung von mindestens zwei Übertragungsstandards ausgebildet ist. Ein Teilnehmer, der in einem ersten Kommunikationsnetz mit einem ersten Übertragungsstandard eine gewünschte Datenübertragung anfordert, wird zur Durchführung der Datenübertragung an ein zweites Kommunikationsnetz mit einem zweiten Übertragungsstandard übergeben und dort bei der Zuordnung von Übertragungsressourcen gegenüber Teilnehmern des zweiten Kommunikationsnetzes bevorzugt behandelt.

## Beschreibung

Die Erfindung betrifft ein Verfahren zur Durchführung einer Datenübertragung mit Hilfe eines Funkkommunikationsendgeräts, das zur Verarbeitung von mindestens zwei Übertragungsstandards ausgebildet ist.

Derartige Funkkommunikationsendgeräte sind beispielsweise mobile Dualmode-Funkkommunikationsendgeräte, die z.B. neben dem UMTS-Übertragungsstandard auch den GSM-Übertragungsstandard unterstützen. Abhängig von der Funkversorgungssituation und abhängig vom Teilnehmer wird eine gewünschte Datenübertragung entweder mit Hilfe des GSM-Übertragungsstandards oder mit Hilfe des UMTS-Übertragungsstandards durchgeführt.

Während GSM-Kommunikationsnetze bereits flächendeckend eingeführt sind, sollen UMTS-Kommunikationsnetze in einer ersten Ausbaustufe bevorzugt für dichtbesiedelte, städtische Gebiete in Betrieb genommen werden. Dabei haben Teilnehmer mit den oben genannten Dualmode-Funkkommunikationsendgeräten in dünnbesiedelten, ländlichen Gebieten lediglich Zugriff auf ein nach dem GSM-Übertragungsstandard ausgebildetes Mobilfunk-Kommunikationsnetz.

Seitens eines Netzbetreibers entstehen bei einer Realisierung des UMTS-Kommunikationsnetzes hohe Kosten, die beispielsweise durch eine Vielzahl von als NodeB's bezeichneten UMTS-Basisstationen, die für systembedingt kleinflächig ausgebildete UMTS-Funkzellen benötigt werden, verursacht werden. Gleichzeitig können bis zur Marktdurchdringung Kosten nur auf eine geringe Anzahl von UMTS-Teilnehmern umgelegt werden. Aus der Sicht des Netzbetreibers gilt es daher als Zielsetzung, bei einem kostengünstigen UMTS-Netzausbau Teilnehmern gewünschte Dienste anzubieten.

Ein UMTS-Teilnehmer hingegen wird nur Kosten für angebotene Dienste entsprechender Qualität tragen wollen, während er gegenüber kostenintensiven technischen Details eher desinteressiert sein wird.

Es ist Aufgabe der vorliegenden Erfindung, einem Teilnehmer gewünschte Dienste eines neu einzuführenden Kommunikationsstandards in einer für den Netzbetreiber kostengünstigen Form anzubieten und Datenübertragungen des Dienstes mit entsprechender Qualität durchzuführen.

Die Aufgabe der Erfindung wird durch die Merkmale des Patentanspruchs 1 gelöst. Vorteilhafte Weiterbildungen sind in den Unteransprüchen angegeben.

Das erfindungsgemäße Verfahren kommt für einen Teilnehmer zur Anwendung, der ein Funkkommunikationsendgerät verwendet, das zur Verarbeitung von mindestens zwei Übertragungsstandards ausgebildet ist.

Mit Hilfe der vorliegenden Erfindung werden vom Teilnehmer angeforderte Dienste eines neu einzuführenden Übertragungsstandards sowohl funknetzseitig als auch leitungsgebunden an entsprechend geeignete Übertragungsressourcen bzw. Dienste eines bereits eingeführten Kommunikationsnetzes bedarfsweise übergeben. Dabei wird eine vom Teilnehmer vorausgesetzte bzw. geforderte Qualität einer entsprechenden Datenübertragung beibehalten.

Als Qualitätskriterien sind beispielsweise bei einer Sprachverbindung eine erreichbare Sprachqualität oder bei einer Paketdatenübertragung eine maximal erzielbare Datenrate einführbar.

Das erfindungsgemäße Verfahren kommt zur Anwendung, wenn der Teilnehmer aus einer Funkzelle eines neu einzurichtenden Kommunikationsnetzes in einen Bereich gelangt, der beispielsweise ausschließlich mit Hilfe eines bereits realisierten Übertragungsstandard funkversorgt wird, bzw. wenn in diesem Bereich das neu einzurichtende Kommunikationsnetz nur eine unzureichende Funkversorgung bietet.

Das erfindungsgemäße Verfahren kommt weiterhin zur Anwendung, wenn dem Teilnehmer zur Durchführung einer Datenübertragung eines gewünschten Dienstes im neu einzurichtenden Kommunikationsnetz eine erforderliche Anzahl an Übertragungsressourcen nicht zur Verfügung gestellt werden kann, während im bereits realisierten Übertragungsstandard geeignete freie Übertragungsressourcen vorhanden sind.

Das erfindungsgemäße Verfahren ist sowohl für eine aktiv durchgeführte Datenübertragung zwischen Teilnehmer und Kommunikationsnetz als auch für den Fall eines Standby-Betriebs des Kommunikationsendgeräts anwendbar.

Im folgenden werden einige Ausführungsbeispiele der Erfindung näher erläutert, wobei beispielhaft - jedoch nicht ausschließlich - ein UMTS-Kommunikationsnetz und ein GSM-Kommunikationsnetz betrachtet werden.

Erfindungsgemäß wird eine Datenübertragung eines gewünschten Dienstes eines UMTS-Teilnehmers an das GSM-Kommunikationsnetz übergeben und dort abgewickelt. Dabei werden im GSM-Kommunikationsnetz dem Teilnehmer entsprechend geeignete Übertragungsressourcen in ausreichender Anzahl zugeordnet. Stehen diese dort nicht unmittelbar zur Verfügung, werden sie, wie nachfolgend beschrieben, durch eine Neuzuordnung von GSM-Übertragungsressourcen im GSM-Kommunikationsnetz erzeugt.

Bei einem Netzbetreiber, der sowohl Lizenzen für GSM-Frequenzen als auch für UMTS-Frequenzen erworben hat, wird beispielsweise zur Durchführung eines Sprachdienstes erfindungsgemäß ein gemeinsames Mobile-Switching-Center MSC verwendet, das neben Elementen für das GSM-Kommunikationsnetz zusätzliche Elemente für das UMTS-Kommunikationsnetz beinhaltet. Die Zuteilung von Übertragungsressourcen erfolgt mit Hilfe eines Base-Station-Controllers BSC, wobei teilnehmerspezifische Daten unter anderem im Home-Location-Register HLR verfügbar sind.

Besonders vorteilhaft werden zur Zuteilung der Übertragungsressourcen den Teilnehmern Prioritäten zugeordnet bzw. Prioritäten über sogenannte Quality-of-Service-Parameter für die jeweiligen Datenübertragungen ermittelt. Einem Teilnehmer, dessen Datenübertragung aus dem UMTS-Kommunikationsnetz an das GSM-Kommunikationsnetz übergeben wird, erhält vergleichend zu einem GSM-Teilnehmer, der von jeher im GSM-Kommunikationsnetz eingebucht war, eine höhere Priorität zugeordnet.

Mit Hilfe dieser Priorität wird verhindert, dass bei der oben beschriebenen Neuzuordnung der Übertragungsressourcen für den Fall einer Übergabe weiterer Datenübertragungen aus dem UMTS-Kommunikationsnetz an das GSM-Kommunikationsnetz bereits im GSM-Kommunikationsnetz etablierte Datenübertragungen ehemaliger UMTS-Teilnehmer benachteiligt werden.

Sinngemäß wird ein weiterer Teilnehmer, der beispielsweise einem WLAN-Kommunikationsnetz zugeordnet ist, zur Abwicklung einer von ihm gewünschten Datenübertragung beispielsweise ebenfalls an das GSM-Kommunikationsnetz übergeben. Dieser weitere Teilnehmer erhält gegenüber dem UMTS-Teilnehmer im GSM-Kommunikationsnetz eine höhere Priorität zugeordnet und wird bei der Zuteilung von Übertragungsressourcen entsprechend bevorzugt behandelt.

Die teilnehmerspezifischen Prioritäten werden als Subskriptionsparameter bevorzugt im Home-Location-Register HLR hinterlegt.

Durch die verwendeten und seitens des Netzbetreibers intern bestimmbaren Quality-of-Service-Parameter wird ermöglicht, für Datenübertragungen bestimmter Teilnehmergruppen zu erreichende Zieldatenraten vorzugeben.

Beim GSM-Kommunikationsnetz sind mit Hilfe sogenannter "enhanced Multi Level Precedence and Preemption, eMLPP"-Parameter bis zu sieben verschiedene Prioritätsstufen realisiert, mit deren Hilfe eine einfache Zuordnung von Prioritäten zu den Teilnehmern durchführbar ist. Die eMLPP-Parameter werden im "Home-Location-Register" HLR, auf einer SIM-Karte des Funkkommunikationsendgeräts, bzw. im Mobile-Switching-Center MSC hinterlegt.

Zu den Subskriptionsparametern zählen auch spezifische Informationen des Funkkommunikationsendgeräts. Dazu gehören beispielsweise Nachrichten des Typs "UTRAN Class Mark Change" oder des Typs "Service Handover". Die Nachricht "UTRAN Class Mark Change" gelangt bei einer "Cell-Reselection" von einem UMTS-fähigen Funkkommunikationsendgerät an den netzseitigen Base-Station-Controller BSC. Die Nachricht "Service Handover" gibt an, ob ein UMTS/GSM-Kommunikationsendgerät bei Verfügbarkeit einer UMTS-Funkversorgung "sofort" in das UMTS-Kommunikationsnetz eingebucht werden soll oder ob sie im GSM-Kommunikationsnetz verbleiben soll.

Die teilnehmerspezifischen Prioritäten werden unter Verwendung von Handover-Nachrichten bei der Übergabe der Datenübertragung des UMTS-Teilnehmers an das GSM-Kommunikationsnetz übertragen, bzw. entsprechende GSM-Netzelemente haben über gemeinsam verwendete Netzelemente (z.B. SGSN-Knoten, Home-Location-Register HLR, etc.) Zugriff auf diese Daten.

Beim UMTS-Mobilfunknetz, beim TD-SCDMA-Mobilfunknetz und beim GSM-Mobilfunknetz werden Sprachdienste angeboten, die einen sogenannten "AMR-Codec" als voreingestellten Sprachcodec verwenden. Wie oben dargestellt, werden bedarfsweise freie AMR-Übertragungsressourcen für eine zu übergebende Datenübertragung eines UMTS-Teilnehmers erzeugt.

Ein Engpass an AMR-Übertragungsressourcen wird aufgrund einer hohen Netzauslastung durch ein durchgeführtes "TRAU-Pooling" verursacht. Ein Engpass entsteht ebenfalls bei einer AMR-Wideband-Sprachdatenübertragung durch benötigte Übertragungsressourcen auf 8-PSK-fähigen Sende-Empfangseinrichtungen TRX oder auf Zeitschlitzen einer A_{bis}-Schnittstelle, A_{SUB}-Schnittstelle sowie bei einem Mangel an Übertragungsressourcen beim Base-Station-Controller BSC und bei der Transcodiereinheit TRAU.

Erfindungsgemäß werden dem UMTS-Teilnehmer aufgrund der Qualitätserfordernisse im GSM-Kommunikationsnetz Übertragungsressourcen einer 8-PSK fähigen Sende-Empfangseinrichtung TRX für eine AMR-Wideband-Sprachdatenübertragung zugewiesen. Zusätzlich erfolgt die Zuteilung der für die Datenübertragung erforderlichen Übertragungsressourcen auf der A_{bis}- und auf der A_{sub}-Schnittstelle, sowie der entsprechenden Übertragungsressourcen beim Base-Station-Controller BSC und bei der Transcodiereinheit TRAU.

Zur Schaffung freier Fullrate-Übertragungskanäle wird eine Anzahl von GSM-Teilnehmern durch einen Intrazell-Handover jeweiligen Halfrate-Übertragungskanälen zugeordnet oder es erfolgt eine Übergabe entsprechender GSM-Datenübertragungen an eine benachbarte GSM-Basisstation oder es werden Übertragungsressourcen reduziert, die einer GSM-Datenübertragung bereits zugeordnet waren. Ein vorzeitiger Abbruch bereits eingerichteter GSM-Übertragungen ist ebenfalls durchführbar.

Bei einer durch den UMTS-Teilnehmer angeforderten Paketdatenübertragung wird ein einem EDGE-Teilnehmer zugeordnetes Coding-Scheme einer EDGE-Carrier-Unit zur Schaffung freier Übertragungsressourcen bedarfsweise eingeschränkt oder es werden GSM-Teilnehmer, die eine EDGE-Carrier-Unit belegen, an freie Carrier-Units übergeben.

Zur Abwicklung einer durch den UMTS-Teilnehmer angeforderten AMR-Wideband-Sprachübertragung wird eine EDGE-Carrier-Unit verwendet. Beste Sprachqualität wird mit Hilfe einer "Tandem-Free-Operation, TFO" und der Zuweisung von Fullrate-Übertragungskanälen mit AMR-Sprachcodecs erreicht.

Für einen GSM-Teilnehmer werden über einen sogenannten "SGSN-Knoten" Quality-of-Service-Parameter, wie beispielsweise Verkehrsklassen oder im Falle von Diensten mit Echtzeitanforderungen angeforderte Datendurchsatzraten, an den Base-Station-Controller BSC übermittelt und mit dessen Hilfe entsprechende Übertragungsressourcen zugeordnet. Gemäß 3GPP TS 23.107 V3.4.0 (2000-10), 3^{rd} Generation Partnership Projekt, Technical Specification Group Services and system Aspects, QoS Concept and Architecture, Release 1999, sind die beim SGSN-Knoten bekannten Quality-of-Service-Parameter auch am "Base Station Controller" BSC abrufbar. Teilnehmerspezifische Parameter für ein sogenanntes "Allocation/Retention" werden vom SGSN-Knoten zum Base-Station-Controller BSC übertragen.

Weiterhin werden am Base Station Controller BSC Informationsparameter bereitgestellt, die die Datendurchsatzrate einer Anwendung markieren. Im GSM-Standard ist eine garantierte Datendurchsatzrate für Quality-of-Service-Parameter von Real-Time-Services festgelegt. Diese Datendurchsatzrate wird vom SGSN-Knoten zum Base Station Controller BSC übertragen und für die Berechnung benötigter Übertragungsressourcen verwendet.

Ein von einem an das GSM-Kommunikationsnetz übergebenen UMTS-Teilnehmer angeforderter "Streaming-Dienst" (z.B. Videoübertragung) wird für den Fall, dass der Dienst von einer dortigen "Verkehrsklasse 2" oder von der "Verkehrsklasse 1" nicht unterstützt wird, z.B. da weder eine eGb- noch eine Iu-Schnittstelle unterstützt werden, als markierter interaktiver Dienst mit einer entsprechenden Priorität dem Base-Station-Controller BSC mitgeteilt. Die entsprechende Priorität ist bei der Zuteilung von Übertragungsressourcen gegenüber vergebenen Prioritäten für Dienste der dortigen "Verkehrsklasse 3" höher. Diejenigen UMTS-Teilnehmer, die einem markierten Dienst zugeordnet sind, werden im weiteren Verlauf von einem systembedingt vorzunehmenden "Downgrade" zur Schaffung freier Übertragungsressourcen erfindungsgemäß ausgenommen.

Bei der Zuteilung von Übertragungsressourcen werden die markierten Dienst einer neuen Verkehrsklasse zugerechnet. Es werden somit im GSM-Kommunikationsnetz nun vier Verkehrsklassen verwendet, die sich anhand der Empfindlichkeit bezüglich Verzögerungszeiten während der Datenübertragung wie folgt voneinander unterscheiden:

Einer ersten Verkehrsklasse werden als "Conversational Class" sowohl GSM-Teilnehmer als auch UMTS-Teilnehmer zur Abwicklung einer Sprachübertragung zugeordnet. Dabei wird innerhalb der Verkehrsklasse einem UMTS-Teilnehmer vergleichend zu einem GSM-Teilnehmer erfindungsgemäß eine höhere Priorität zugeordnet. Die gesamte Verkehrsklasse an sich erhält gegenüber den nachfolgend beschriebenen Verkehrsklassen eine höhere Priorität zugeordnet.

Einer zweiten Verkehrsklasse werden als "Streaming Class" GSM-Teilnehmer und UMTS-Teilnehmer zur Abwicklung von Streaming-Diensten zugeordnet, wobei für die Zuordnung der Prioritäten innerhalb der zweiten Verkehrsklasse oben gesagtes entsprechend gilt. Da diese zweite Verkehrsklasse vergleichend zur ersten Verkehrsklasse gegenüber Verzögerungszeiten weniger empfindlich ist, erhält die zweite Verkehrsklasse im Vergleich zur ersten Verkehrsklasse eine geringere Priorität zugeordnet. Von einer notwendig werdenden Abstufung bei zugeordneten Übertragungsressourcen sind "Streaming Dienste" aufgrund ihrer Empfindlichkeit gegenüber Laufzeitverzögerungen ausgenommen.

Einer dritten Verkehrsklasse werden als "Interactive Class" GSM-Teilnehmer und UMTS-Teilnehmer zur Abwicklung von interaktiven Diensten zugeordnet, wobei für die Zuordnung der Prioritäten innerhalb der dritten Verkehrsklasse oben gesagtes entsprechend gilt. Zu diesen interaktiven Diensten zählen interaktive Email-Übertragungen, interaktive WEB-Zugriffe (WAP und HTTP) oder ein Download eines Programms aus dem Internet. Da diese dritte Verkehrsklasse vergleichend zur zweiten Verkehrsklasse gegenüber Verzögerungszeiten weniger empfindlich ist, erhält die dritte Verkehrsklasse im Vergleich zur zweiten Verkehrsklasse eine geringere Priorität zugeordnet.

Einer vierten Verkehrsklasse werden als "Background Class" GSM- und UMTS-Teilnehmer zur Abwicklung von Hintergrunddiensten zugeordnet, wobei für die Zuordnung der Prioritäten innerhalb der vierten Verkehrsklasse oben gesagtes entsprechend gilt. Da diese vierte Verkehrsklasse vergleichend zur dritten Verkehrsklasse gegenüber Verzögerungszeiten weniger empfindlich ist, erhält die vierte Verkehrsklasse im Vergleich zur dritten Verkehrsklasse eine geringere Priorität zugeordnet.

Erfindungsgemäß wird basierend auf den Quality-of-Service-Parametern demjenigen UMTS-Teilnehmer eine maximale Priorität zugeordnet, der die höchste Verkehrsklasse und innerhalb dieser Verkehrsklasse die höchste Priorität aufweist und der zusätzlich die höchste Allocation/Retention-Priorität besitzt.

Zur Durchführung von echtzeitkritischen Datenübertragungen (mit Hilfe sogenannter Conversational-Dienste) wird entsprechenden Teilnehmern eine maximale Priorität zugeordnet. Dazu zählen beispielsweise Videokonferenzen, an die seitens der Teilnehmer Echtzeit-Anforderungen gestellt werden, wodurch hier Verzögerungszeiten sehr kritisch sind. Die Datenübertragung erfolgt hier in zwei Richtungen gleichzeitig.
Vergleichend dazu werden bei den Streaming-Diensten Videosequenzen oder Audio-Clips in der Regel zuerst aufgezeichnet und nachfolgend jedoch nur in einer Richtung gesendet.

Im Fall einer "Link-Adaption", bei der vergleichend zu Real-Time-Diensten robuste Codierverfahren verwendet werden, wird eine größere Anzahl von Übertragungsressourcen zur Beibehaltung der Datendurchsatzrate benötigt. Für eine notwendig werdende Erzeugung freier Übertragungsressourcen werden Dienste mit geringeren Quality-of-Service-Anforderungen abgestuft. Dies erfolgt dadurch, dass zugeordnete Zeitschlitze in ihrer Anzahl reduziert oder von mehreren Teilnehmern zeitgleich benutzt werden. Die zeitgleiche Benutzung ist mit teilnehmerspezifischen Gewichtungsfaktoren durchführbar. Verbindungen mit einer minimalen Quality-of-Service-Anforderung werden zuerst abgestuft - in diesem Beispiel GSM-Teilnehmer. Erfindungsgemäß werden also UMTS-Teilnehmer, die aus dem UMTS-Funknetz kommend im GSM-Funknetz eingebucht werden, von einer derartigen Abstufung ausgenommen.

Erfindungsgemäß wird die auf Quality-of-Service-Parametern beruhende Zuordnung von Übertragungsressourcen auch bei der Paketdatenübertragung durchgeführt. Dabei sind Datendurchsatzrate, Quality-of-Service-Priorität, Zugriffspriorität und Datenqualität als vier Aspekte zu beachten.

Um vergleichbare Übertragungsraten für UMTS-Teilnehmer im GSM-Kommunikationsnetz anzustreben, werden gewünschte Zieldatenraten vom Netzbetreiber vorgegeben. Die verfügbaren Übertragungsressourcen werden so verteilt, dass ein an das GSM-Kommunikationsnetz übergebener UMTS-Teilnehmer die ihm zuordenbare Datenrate erreicht. Freie Übertragungsressourcen werden dann den GSM-Teilnehmern zugeordnet, die gewichtet anhand der Dienst- und Teilnehmerpriorität erfolgt.

Bei Paketdatenübertragungen bezieht sich die Schaffung von freien Übertragungsressourcen unter anderem auf 8-PSK-fähige Sende/Empfangseinrichtungen TRX, auf deren Auswahl anhand zu erwartender Funkfeldbedingungen, auf A_{bis}-Ressourcen, PCU-Ressourcen, Gb-, eGb-, Iu-, SGSN- und GGSN-Ressourcen.

Bei Sprachübertragungen inklusive AMR-Wideband bezieht sich die Schaffung freier Übertragungsressourcen unter anderem auf 8-PSK-fähige Sende/Empfangseinrichtungen TRX, auf deren Auswahl anhand der Funkfeldbedingungen, auf A_{bis}-, BSC-, A_{sub}- und TRAU-Übertragungsressourcen.

Im Falle von Tandem Free Operation TFO bezieht sich die Schaffung freier Übertragungsressourcen unter anderem auf die jeweiligen beiden Verbindungsteile, z.B. TFO zwischen UMTS-Teilnehmer und GSM-Teilnehmer.

In den Fällen Paketdatendienste und Sprachdienste ist die Anzahl der Übertragungsressourcen wesentlich für die Qualität der Datenübertragung und für die Aufrechterhaltung der aus dem UMTS-Kommunikationsnetz bekannten Qualität.

Eine qualitativ hochwertige Verbindung mit geringer Fehlerrate wird erreicht, indem im GSM-Kommunikationsnetz einem übergebenen UMTS-Teilnehmer ein höhercodiertes Codierschema zugeordnet wird.

Ein übergebener Teilnehmer des UMTS-Kommunikationsnetzes wird im GSM-Kommunikationsnetz entweder bevorzugt gegenüber einem EDGE-Teilnehmer und dieser wiederum bevorzugt gegenüber einem normalen GSM/GPRS-Teilnehmer behandelt, oder der übergebene UMTS-Teilnehmer und der EDGE-Teilnehmer werden gleich behandelt und besitzen eine höhere Priorität gegenüber normalen GSM/GPRS-Teilnehmern.

Besonders bevorzugt erfolgt die Zuteilung von Übertragungsressourcen unter Berücksichtigung eines maximal möglichen Frequenzwiederholungsfaktors und/oder einer minimalen Interferenz und/oder einer vorbestimmten Quality-Of-Sevice-Anforderung.

## Patentansprüche

1. Verfahren zur Durchführung einer Datenübertragung mit Hilfe eines Funkkommunikationsendgeräts, das zur Verarbeitung von mindestens zwei Übertragungsstandards ausgebildet ist,
- bei dem ein erster Teilnehmer, der in einem ersten Kommunikationsnetz mit einem ersten Übertragungsstandard eine gewünschte Datenübertragung anfordert, zur Durchführung der Datenübertragung an ein zweites Kommunikationsnetz mit einem zweiten Übertragungsstandard übergeben wird,
- bei dem der erste Teilnehmer im zweiten Kommunikationsnetz gegenüber Teilnehmern des zweiten Kommunikationsnetzes eine höhere Priorität erhält und bei der Zuordnung von Übertragungsressourcen bevorzugt behandelt wird.

2. Verfahren nach Anspruch 1,
- bei dem ein weiterer Teilnehmer, der einem dritten Kommunikationsnetz mit einem dritten Übertragungsstandard zugeordnet ist, zur Abwicklung einer von ihm gewünschten Datenübertragung an das zweite Kommunikationsnetz übergeben wird,
- bei dem der dritte Teilnehmer gegenüber dem ersten Teilnehmer im zweiten Kommunikationsnetz eine höhere Priorität zugeordnet wird und bei der Zuteilung von Übertragungsressourcen entsprechend bevorzugt behandelt wird.

3. Verfahren nach Anspruch 1 oder 2, bei dem für die bevorzugte Zuteilung Übertragungsressourcen des zweiten Kommunikationsnetzes verwendet werden, die für eine leitungsgebundene Datenübertragung und/oder für eine Funkdatenübertragung vorgesehen sind.

4. Verfahren nach einem der vorhergehenden Ansprüche, bei dem freie Übertragungsressourcen im zweiten Kommunikationsnetz zur Durchführung der Datenübertragung des ersten Teilnehmers dadurch erzeugt werden,
- dass den bisherigen Teilnehmern des zweiten Kommunikationsnetzes bisher zugeordnete Übertragungsressourcen in ihrer Anzahl und/oder in ihrer Übertragungskapazität verringert werden, oder
- dass Datenübertragungen der bisherigen Teilnehmer des zweiten Kommunikationsnetzes von einer ersten Kommunikationseinrichtung an eine benachbarte Kommunikationseinrichtung mit freien Übertragungsressourcen übertragen werden, oder
- dass Datenübertragungen bisheriger Teilnehmer des zweiten Kommunikationsnetzes beendet werden.

5. Verfahren nach einem der vorhergehenden Ansprüche, bei dem als Übertragungsstandard ein UMTS- und/oder ein TD-SCDMAund/oder ein GSM- und/oder ein WLAN-Übertragungsstandard zur Datenübertragung verwendet wird.

6. Verfahren nach Anspruch 5, bei dem zur Durchführung einer AMR-Sprachdatenübertragung dem ersten Teilnehmer bevorzugt Übertragungsressourcen für einen freien AMR-Fullrate-Übertragungskanal einer Kommunikationseinheit des zweiten Kommunikationsnetzwerks zugeordnet werden.

7. Verfahren nach Anspruch 6, bei dem freie Übertragungsressourcen zur Durchführung der Datenübertragung des ersten Teilnehmers dadurch geschaffen werden,
- dass eine Datenübertragung eines bisherigen Teilnehmers des zweiten Kommunikationsnetzes, die mit Hilfe eines AMR-Fullrate-Übertragungskanals durchgeführt wurde, an einen AMR-Halfrate-Übertragungskanal übergeben wird, oder
- dass dem bisherigen Teilnehmer zur Datenübertragung ein anderer Sprachcodec zugeordnet wird, oder
- dass eine Sprachdatenübertragung des bisherigen Teilnehmers einer benachbarten Kommunikationseinrichtung oder Basisstation übergeben wird, oder
- dass die Sprachdatenübertragung des bisherigen Teilnehmers vorzeitig beendet wird.

8. Verfahren nach einem der Ansprüche 5 bis 7, bei dem zur Durchführung einer AMR-Wideband-Sprachdatenübertragung dem ersten Teilnehmer im zweiten Kommunikationsnetz eine EDGE-Carrier-Unit einer Basisstation des zweiten Kommunikationsnetzes zugeordnet wird.

9. Verfahren nach einem der Ansprüche 5 bis 8, bei dem die Zuordnung von Übertragungsressourcen im zweiten Kommunikationsnetz mit Hilfe einer Basisstations-Kontrolleinrichtung BSC unter Verwendung der teilnehmerspezifischen Prioritäten durchgeführt wird, wobei in einem Home-Location-Register HLR abgespeicherte oder teilnehmerseitig angeforderte und zu einem SGSN-Knoten übertragene Anforderungen an die Datenübertragung für die Bestimmung der Prioritäten verwendet werden.

10. Verfahren nach einem der vorhergehenden Ansprüche, bei dem Teilnehmern zur Durchführung einer Streaming-Datenübertragung oder zur Durchführung einer echtzeitkritischen Datenübertragung maximale Prioritäten zugeordnet werden.

11. Verfahren nach Anspruch 10, bei dem die maximale Priorität aus übermittelten teilnehmerspezifischen Parametern berechnet wird und eine vom Teilnehmer geforderte Datendurchsatzrate vom SGSN-Knoten zur Basisstations-Kontrolleinrichtung BSC übertragen wird.

12. Verfahren nach einem der vorhergehenden Ansprüche, bei dem die dem ersten Teilnehmer bevorzugt zugeordneten Übertragungsressourcen im zweiten Kommunikationsnetz von Maßnahmen zur Schaffung freier Übertragungsressourcen ausgenommen werden.

13. Verfahren nach einem der vorhergehenden Ansprüche, bei dem die bevorzugte Zuteilung von Übertragungsressourcen unter Berücksichtigung eines maximal möglichen Frequenzwiederholungsfaktors und/oder einer minimalen Interferenz und/oder einer vorbestimmten Quality-Of-Sevice-Anforderung durchgeführt wird.
